Europäisches Patentamt

**European Patent Office**

**Office européen des brevets**

(11) Veröffentlichungsnummer: **0 162 040**
A2

(12) # EUROPÄISCHE PATENTANMELDUNG

(21) Anmeldenummer: 85890099.6

(51) Int. Cl.⁴: **B 27 F 7/15,** B 27 M 3/00

(22) Anmeldetag: 25.04.85

(30) Priorität: 16.05.84 AT 1619/84

(43) Veröffentlichungstag der Anmeldung: 21.11.85
Patentblatt 85/47

(84) Benannte Vertragsstaaten: DE FR GB SE

(71) Anmelder: **Johann Wolf GmbH KG, Mühldorf 86,
A-4644 Scharnstein (AT)**

(72) Erfinder: **Wolf, Johann, Mühldorf 86, A-4644 Scharnstein
Oberösterreich (AT)**

(74) Vertreter: **Beer, Otto, Dipl.-Ing. et al, Lindengasse 8,
A-1071 Wien (AT)**

(54) Vorrichtung zum Verbinden von aneinander anliegenden Balken od. dgl. mittels Nagelplatten.

(57) In einer Vorrichtung zum Verbinden zweier oder mehrerer längsgerichteter Balken (1) od. dgl. zu Trägern mittels vorgefertigter Nagelplatten (2) sind vor und hinter einem als Auflage für die Balken (1) ausgebildeten Tisch (5) zum Vorschub bzw. zur Unterstützung und zur Ausrichtung der zu verbindenden Balken (1) od. dgl. Vorschubeinrichtungen (6) und Führungseinrichtungen (7), oberhalb des Tisches (5), eine Zusammenpresseinrichtung (8) zum Zusammenpressen der Balken (1) od. dgl. bzw. zum Anpressen derselben an den Tisch (5) und beiderseits des Tisches bzw. des zu verbindenden Balken (1) od. dgl. Einpressplatten (9) angeordnet, die halterungen (10) für die nagelplatten (2) tragen. Die sich über die gesamte Höhenerstreckung der zu verbindenden Balken (1) od. dgl. hinaus erstreckenden Einpressplatten (9) sind miteinander zum Ausführen gegenläufiger Bewegungen verbunden.

0162040

<u>Vorrichtung zum Verbinden von aneinander anliegenden
Balken od. dgl. mittels Nagelplatten</u>

Die Erfindung betrifft eine Vorrichtung zum Verbinden
zweier oder mehrerer längsgerichteter Balken od. dgl. zu
Trägern mittels vorgefertigter Nagelplatten.

Beim Einpressen von Nagelplatten mit einer üblichen
mechanischen oder hydraulischen Presse kann es
vorkommen, daß die Balken od. dgl. an den Nagelstellen
nicht satt aufeinander liegen, was bei Beanspruchung zum
Ausziehen der Nagelplatten führen kann. Außerdem sind
beim Nageln größerer Balken diese schwer zu handhaben
und das Einpressen der Nagelplatten wird dadurch
zeitraubend.

Aus der GB-PS 1 442 148 und 1 515 032 sind Vorrichtungen
zur Herstellung von Rahmen, insbesondere für
Drahtfederbetteinsätze bekannt, bei welchen die
Rahmenseiten und die Zwischenstücke stumpf
aneinanderstoßen und an den Stoßstellen durch
Nagelplatten miteinander verbunden werden.

Dabei sollen die Nagelplatten durch einen Trennvorgang
von mit vorgestanzten Zähnen versehenen und auf Rollen
aufgewickelten Bändern gebildet werden.

Demgegenüber liegt der Erfindung die Aufgabe zugrunde,
eine Vorrichtung zum Verbinden zweier oder mehrerer
längsgerichteter Balken od. dgl. zu Trägern an ihren
geradlinigen, im wesentlichen ebenen Berührungsflächen
mittels vorgefertigter Nagelplatten zu schaffen, dabei
ein sattes Aufeinanderliegen durch unverrückbares
Festhalten der Balken od. dgl. zu gewährleisten. Eine
zuverlässige Erfüllung dieser Aufgabe ist für das Maß
der Belastbarkeit der hergestellten Träger von
Bedeutung.

0162040

In Lösung dieser Aufgabe ist die erfindungsgemäße Vorrichtung dadurch gekennzeichnet, daß vor und hinter einem als Auflage für die Balken ausgebildeten Tisch zum Vorschub bzw. zur Unterstützung und zur Ausrichtung der zu verbindenden Balken od. dgl. Vorschubeinrichtungen und Führungseinrichtungen, oberhalb des Tisches eine Zusammenpreßeinrichtung zum Zusammenpressen der Balken od. dgl. bzw. zu deren Anpressen an den Tisch und beiderseits des Tisches und damit der zu verbindenden Balken od. dgl. Einpreßplatten angeordnet sind, die Halterungen für die Nagelplatten einstellbar auf die Verbindungsebene bzw. -ebenen der Balken od. dgl. tragen, wobei die sich über die gesamte Höhenerstreckung der zu verbindenden Balken od. dgl. hinaus erstreckenden Einpreßplatten durch oberhalb und unterhalb der zu verbindenden Balken od. dgl. liegende hydraulische Zylinder und durch ein, vorzugsweise in einem Rahmengestell der Vorrichtung gelagerte Hebelgestänge als Parallelführung zu einer gemeinsamen gegenläufigen Bewegung untereinander verbunden sind.

Ein wesentliches Merkmal der erfindungsgemäßen Vorrichtung ist darin zu erblicken, daß vor und hinter einem als Auflage für die Balken od. dgl. ausgebildeten Tisch zum Vorschub sowie zur Unterstützung der zu verbindenden Balken od. dgl. Vorschubeinrichtungen und Führungseinrichtungen, oberhalb des Tisches eine Zusammenpreßeinrichtung zum Zusammenpressen der Balken bzw. zu deren Anpressen an den Tisch und seitlich des Tisches Einpreßplatten angeordnet sind, die mit Halterungen für die Nagelplatten versehen und gegen die Balken od. dgl. hin bewegbar sind. Mit Hilfe einer so ausgebildeten Vorrichtung ist eine sichere und dauerhafte Verbindung von Balken od. dgl. herstellbar.

Einzelheiten und weitere Merkmale der Vorschubeinrichtungen, der Führungseinrichtungen und der Zusammenpreß- bzw. Anpreßeinrichtung für die Balken od.

0162040

dgl., der Einpreßeinrichtung für die Nagelplatten, der Steuerung sowie der Ausbildung eines Rahmengestells ergeben sich aus den Unteransprüchen 2 bis 11 im Zusammenhang mit der Beschreibung der Erfindung anhand von Ausführungsbeispielen.

Mit der erfindungsgemäßen Vorrichtung können verschieden starke Balken und auch zwei oder mehrere Balken, jedoch jeweils gleicher Größe miteinander verbunden werden. Die Größe der vorgefertigten Nagelplatten richtet sich ebenfalls nach der Stärke der Balken und ist ebenfalls verschieden groß bemessen. Da die Nagelplattenmitte immer auf der Verbindungsebene zweier Balken liegen soll, um eine einwandfreie Verbindung herzustellen, sind die Halterungen gegenüber den Einpreßplatten in ihrer Höhenlage einstell- und feststellbar ausgebildet.

In der Regel werden zwei oder drei Balken zu einem Träger vernagelt. Dementsprechend sind auf der linken und rechten Seite der durchlaufenden Balken je zwei Halterungen übereinander angebracht. Die Anzahl der Halterungen und der Führungsplatten kann erhöht werden, falls eine größere Anzahl Balken miteinander verbunden werden soll.

Die in den Halterungen befindlichen Nagelplatten werden vor jedem Nagelvorgang einzeln mit der nachfolgenden Nagelplatte, die in die Halterung geschoben wird, hineingeschoben. Beim Einlegen der Nagelplatten ist die Bedienungsperson nicht gefährdet, da sie nicht hinter die Einpreßplatten greifen kann und die Halterung beim Preßvorgang nicht bewegt wird. Die Halterung ist so bemessen, daß sie die Nagelplatten leicht aufnehmen kann, aber ein Durchgreifen mit der Hand bis in den Nagelraum unmöglich ist.

Die Halterungen für die Nagelplatten können auch als Magazine für eine größere Anzahl Nagelplatten ausgebildet sein, so daß die Bedienungsperson die Magazine nur von Zeit zu Zeit auffüllen braucht. Das Einschieben der einzelnen Nagelplatten in den Preßbereich kann ebenfalls mechanisch, z.B. mit einem kleinen Hubzylinder, erfolgen.

Die Balken werden einlaufseitig übereinander auf den Führungseinrichtungen aufgelegt, von den Vorschubeinrichtungen erfaßt und auf das gewünschte Maß zwischen die geöffneten Einpreßplatten eingezogen. Der Vorschubantrieb erfolgt zweckmäßig (wegen dem häufigen Ab- und Zuschalten) hydraulisch mit einem Ölmotor. Während des Vorschubes der Balken werden die Nagelplatten von Hand oder automatisch in den Preßbereich eingeschoben. Unmittelbar nach Unterbrechung des Vorschubes wird die vertikal gegen den Tisch bewegbare Zusammenpreßeinrichtung gegen die Balken gedrückt, so daß diese satt aufeinander gepreßt werden. Beim anschließenden Nagelvorgang werden die Einpreßplatten und die damit verbundenen Halterungen kräftig gegeneinander gedrückt und dabei die Nagelplatten in die Balken gepreßt. Die gegenläufige Bewegung der Einpreßplatten erfolgt ebenfalls mit einem Hydraulikzylinder über eine Parallelführung, oder mit je einem oberhalb und unterhalb der Einpreßplatten liegenden Zylinder, die mit einer Parallelführung verbunden sind.

Nach Beendigung des Nagelvorganges werden die Zusammenpreßeinrichtung und die Einpreßplatten in ihre Ausgangsstellung zurückgeholt und der Vorschub wird solange zugeschaltet, bis die Balken mit der nächsten Nagelstelle im Preßraum liegen. Der Ablauf der einzelnen Operationen wiederholt sich bei jeder Nagelstelle in gleicher Weise und besteht aus den Takten: Unterbrechung des Vorschubes - Zusammenpressen der Balken gegen den Tisch - Zusammenziehen der Einpreßplatten (Eindrücken der Nagelplatten) - Zurückführen der Druck- und Preßplatten in die Ausgangsstellung - Einschalten des Vorschubes. Dieser stets sich wiederholende Ablauf wird mechanisch mit einer Nockenwalze, welche die einzelnen Ventilstößel betätigt, oder elektrisch mit gesteuerten Magnetventilen gesteuert. Der hydraulische Vorschubantrieb wird durch Umleitung des Ölstromes über ein Mehrwegventil unterbrochen. Über dieses Ventil wird der Vorschub zu- und abgeschaltet und im abgeschalteten Zustand treibt der Ölstrom einen kleinen Ölmotor für den Antrieb der Nockenwalze. Nach einer Umdrehung der Nockenwalze (voller Ablauf des Nagelvorganges) schaltet diese das Mehrwegventil wieder auf Vorschub.

Die Nutzung der Nagelplatten nach statischen Erfordernissen verlangt an den Enden der Balken geringere Abstände der Nagelplatten als im mittleren Bereich. Das erfordert in der einlaufenden Balkenhälfte zunehmend größer werdende Abstände der Nagelplatten und in der zweiten Hälfte umgekehrt kleinere Abstände der Nagelplatten. Das heißt, nach der statischen Berechnung sind die Abstände der Nagelplatten bestimmt und weisen verschieden große Abstände auf.

Zur Steuerung der unterschiedlich großen Vorschübe sind verschiedene Einrichtungen vorgesehen. In der einfachsten Form erfolgt die Steuerung von Hand bzw. mit einem Pedal in Verbindung mit einer visuellen oder schrittweisen akustischen Längenanzeige des Balkenvorschubes. Eine praktische Ausbildung dieser Art besteht aus einem Tastrad, welches federbelastet auf den durchlaufenden Balken drückt und beim Vorschub des Balkens mitgenommen wird. Mit einem angepaßten Untersetzungstrieb wird die Drehung des Tastrades entsprechend dem Balkenvorschub auf einer kreisrunden Anzeige oder digital in Zentimetern usw. angezeigt. Anhand dieser Anzeige und dem vorgegebenen statischen Plan, in dem die Abstände der Nagelplatten festgelegt sind, werden diese durch Handauslösung des

0162040

Nagelvorganges gesetzt.

In weiterer Ausgestaltung der Steuerung kann vorgesehen sein, den Ablauf des Tastrades am Balken auf eine Indexscheibe oder -schiene zu übertragen. Die Indizes auf der Scheibe bzw. Schiene lösen jeweils die Unterbrechung des Vorschubes aus, worauf der Nagelvorgang wie oben beschrieben abläuft. Für jede Balkenlänge bzw. Nagelplattenplan (Statik) ist eine entsprechende Indexscheibe anzufertigen. Zur Vereinfachung können Bohrungen oder Höcker (Nieten) als Marken auf der Indexscheibe dienen.

In vorzugsweiser Ausbildung der Steuerung der Nagelvorgänge werden die Vorschübe elektrisch gesteuert. Die Balkenlänge und die fortlaufenden Abstände der einzelnen Nagelplatten werden in ein elektronisches Speichergerät eingegeben, welches die entsprechenden Impulse über Schaltrelais, die mit Magnetventilen gekoppelt sind, erteilt. Mit dieser Speicherung kann jede Balkenlänge und jeder beliebige Abstand der Nagelplatten eingegeben werden, so daß damit eine optimale Anpassung und eine große Entlastung für die Bedienungsperson gegeben ist. Bei dieser Ausführung der Vorschubsteuerung wird der oben beschriebene Ablauf des Nagelvorganges ebenfalls mit Hilfe eines elektronischen Bauteils gesteuert. Diese elektronische Steuerung kann auch mit feststehenden Vorschubwerten ausgestattet sein. Mit Drucktasten können die einzelnen Abstandswerte (z.B. 20, 30, 40 und 60 cm) abgerufen werden.

Die Erfindung wird anhand von in der Zeichnung schematisch veranschaulichten Ausführungsformen einer Vorrichtung zum Verbinden von Balken ohne eine Beschränkung auf Einzelheiten erläutert. Es zeigt

Figur 1 eine Frontansicht einer Nagelmaschine mit eingeschobenen Balken und Nagelplatten,

0162040

Figur 2 eine Draufsicht zu Figur 1,

Figur 3 und 4 Ausführungsformen von Vorschub-
und Führungseinrichtungen für die zu verbindenden Balken
in Seitenansicht.

Die erfindungsgemäße Vorrichtung zum Verbinden von
aneinander anliegenden Balken 1 od. dgl. unter
Verwendung von Nagelplatten 2 besitzt ein Rahmengestell
3, dessen einer Ständer in Form eines Kastenträgers 4
als Ölbehälter ausgebildet ist. Das Rahmengestell 3
nimmt einen feststehenden, gegebenenfalls auch
verfahrbaren Tisch 5 rechteckiger Form auf, der zur
Unterstützung der Balken 1 od. dgl. dient. An den
Schmalseiten des Tisches 5 sind einerseits
Vorschubeinrichtungen 6 zum Vorschub der miteinander zu
verbindenden Balken 1 od. dgl., anderseits
Führungseinrichtungen 7 zu deren Unterstützung und
Ausrichtung angeordnet. Oberhalb des Tisches 5 nimmt das
Rahmengestell 3 eine Zusammenpreßeinrichtung 8 auf, mit
deren Hilfe die zu verbindenden Balken 1 od. dgl.
gegeneinander zusammengepreßt und an den Tisch 5
angepreßt werden. Schließlich sind seitlich des Tisches
5 und damit seitlich der zu verbindenden Balken 1 od.
dgl. Einpreßplatten 9 gegen die Balken 1 od. dgl. hin
bewegbar angeordnet, die mit Halterungen 10 für die
Nagelplatten 2 versehen sind.

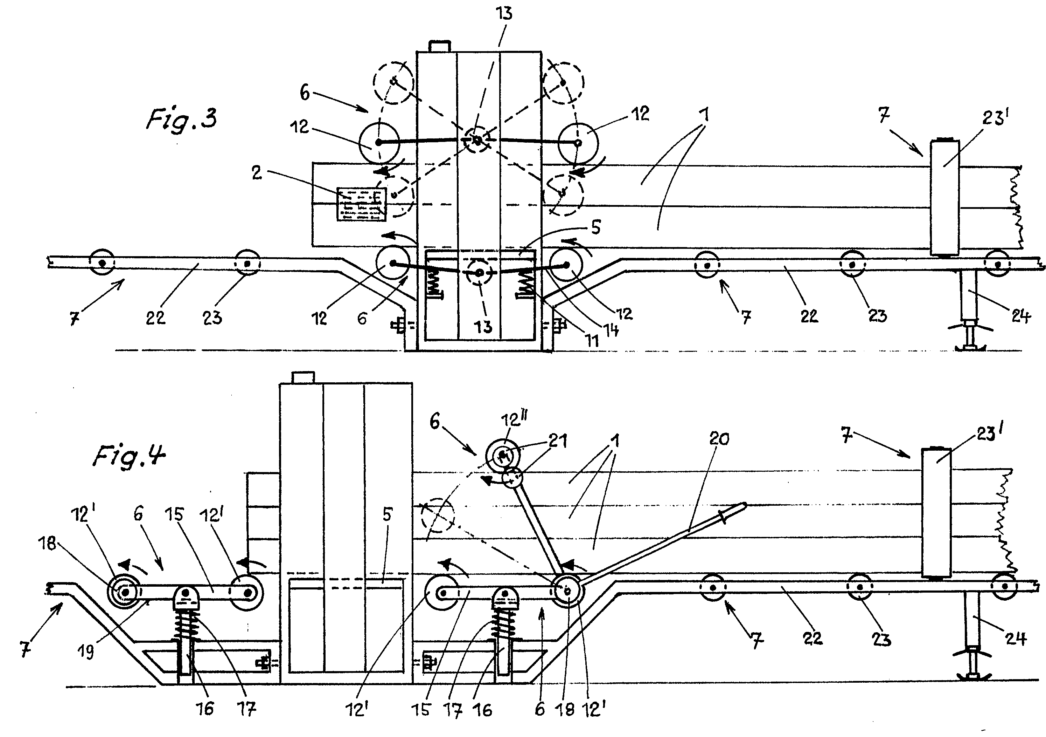

Die Vorschubeinrichtung 6 gemäß Figur 3 besteht aus vor
und hinter dem Tisch 5 und damit auch der Einpreßplatten
9 angeordneten griffigen Walzen 12, die an einarmigen
Lenkern 14 gelagert sind und die durch gegen die Lenker
14 einwirkende Federn 11 gegen die Unterseite der Balken
1 od. dgl. angedrückt werden. Der Antrieb der Walzen 12
im Sinne der eingezeichneten Pfeile erfolgt durch einen
Ölmotor 13 etwa durch einen nicht weiter dargestellten
Kettentrieb. Die unteren Walzen 12 reichen mit ihrer
Mantelfläche geringfügig über die Oberfläche des Tisches
5, um die Balken 1 od. dgl. während des Vorschubes

0162040

abzuheben und damit zu erleichtern. Beim Anpressen der Balken 1 od. dgl. an den Tisch 5 unmittelbar vor und während des Einpressens der Nagelplatten 2 weichen die Walzen 12 entgegen der Spannung der Federn 11 nach unten aus. Die gegen die Oberseite der Balken 1 od. dgl. einwirkenden Walzen 12 sind zur Anpassung an unterschiedliche Balkenstärken bzw. Anzahl in einem großen Bereich verstellbar und über eine Schere oder Gelenkwellen gegenläufig im Sinne der eingezeichneten Pfeile von einem Ölmotor 13 angetrieben. Diese Walzen 12 sind etwa durch ihr entsprechendes Eigengewicht bzw. durch Belastungsgewichte oder auch mittels Federn gegen die Balken 1 od. dgl. angedrückt, sie weisen einen größeren Durchmesser auf als die unteren Walzen.

Die Führungseinrichtungen 7 für die Balken 1 od. dgl. gemäß den Fig. 3 und 4 bestehen aus an den Schmalseiten des Tisches 5 angesetzten und mit dem Rahmengestell 3 verbundenen Auslegern 22, die mit frei drehbaren Walzen oder Rollen 23 bestückt sind und gegebenenfalls auf Balkenlänge ausziehbar sind. Eine Höhenverstellung dieser Führungseinrichtung ist mit Hilfe eines Stützfußes 24 möglich. Zur seitlichen Führung der Balken 1 od. dgl. gegebenenfalls auch zum Vorschub besonders schwerer Balken od. dgl. sind aufrecht stehende Walzen 23' vorgesehen.

Die Vorschubeinrichtung 6 gemäß Figur 4 besteht aus vor und hinter dem Tisch 5 angeordneten Walzenpaaren 12', gegebenenfalls auch mehreren Walzen, die mit der Führungseinrichtung 6 eine Einheit bilden und die an der Nagelmaschine anstellbar und befestigbar sind. Die Walzen 12' sind an zweiarmigen Lenkern 15 gelagert, die begrenzt pendelnd an einer lotrechten Führung 16 angelenkt sind, wobei ein Andrücken der Walzen 12' gegen die Unterseite der Balken 1 od. dgl. mittels Federn 17 erfolgt. Zum Antrieb der Walzen 12' in Pfeilrichtung ist ein Ölmotor 18 und ein Kettentrieb 19 vorgesehen. Von

0162040

oben gegen die Balken 1 od. dgl. wirkt wenigstens eine Walze 12" durch ihr Eigengewicht, Belastungsgewichte oder Federn ein, die mittels eines Kettentriebes und über Stirnräder 21 von einem weiteren Ölmotor 18 angetrieben wird. Zum Abheben der oberen Walze 12" während des Einfädelns von Balken 1 od. dgl. ist ein Handhebel 20 vorgesehen.

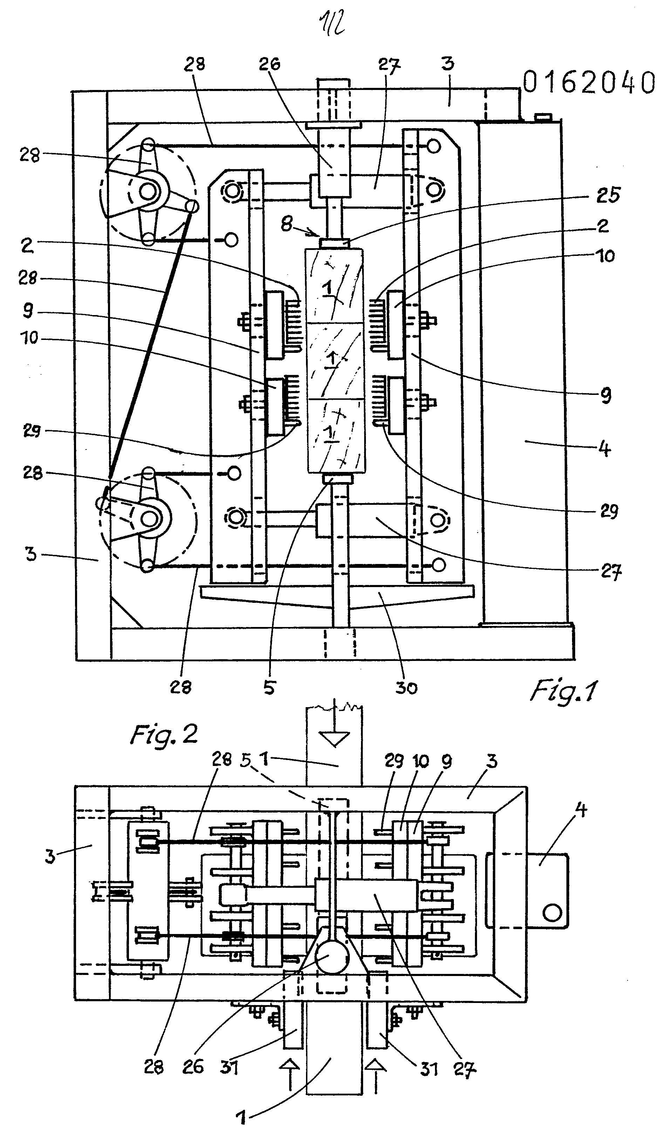

Die in den Figuren 1 und 2 dargestellte Zusammenpreßeinrichtung 8 für die Balken 1 od. dgl. bzw. deren Anpressung an den Tisch 5 besteht aus einer Andrückplatte 25, die mittels eines Hydraulikzylinders 26 gegen die Oberseite der Balken 1 od. dgl. angedrückt wird. Nach dem Zusammenpressen der Balken 1 od. dgl. bzw. deren Anpressen an den Tisch 5 erfolgt eine gegenläufige, gegen die Balken 1 od. dgl. gerichtete Bewegung der Einpreßplatten 9 ein Einpressen der Nagelplatten 2. Diese Bewegung wird durch die beiden Einpreßplatten 9 verbindende Hydraulikzylinder 27 bewirkt, wobei eine Parallelführung durch Hebelgestänge 28 sichergestellt wird und eine Abstützung an Auflagern 30 erfolgt. Die Nagelplatten 2 sind an einstellbar mit den Einpreßplatten 9 verbundenen Halterungen 10 unter Verwendung von federnden Stiften 29 während des Einpreßvorganges gehalten, wobei die Stifte 29 zurückfedern. Die Einstellbarkeit der Halterungen 10 ermöglicht eine Ausrichtung der Nagelplatten 2 jeweils auf Verbindungsebene zweier Balken 1 od. dgl. Zur Zuführung von Nagelplatten 2 zu den Halterungen 10 sind an dem Rahmengestell 3 taschenartige Führungen 31 angeordnet und zwar seitlich verstellbar, zwecks Berücksichtigung der Breite der zu verbindenden Balken 1 od. dgl. und der Höhe nach, zwecks Ausrichtung auf die Verbindungsebene der Balken 1 od. dgl., insgesamt zwecks Herbeiführung einer Fluchtung mit den Halterungen 10 bzw. deren Stiften 29.

Die dargestellten und beschriebenen Ausführungsformen

0162040

einer Nagelmaschine dienen nur zur Erläuterung des Wesens der Erfindung, ohne diese auf Einzelheiten zu beschränken. So ist es z.B. auch möglich, die Maschine auch liegend anzuordnen, wobei der Tisch lotrecht gerichtet wäre und die Einpreßplatten waagerecht liegen würden.

0162040

Patentansprüche:

1. Vorrichtung zum Verbinden zweier oder mehrerer längsgerichteter Balken od. dgl. zu Trägern mittels vorgefertigter Nagelplatten, dadurch gekennzeichnet, daß vor und hinter einem als Auflage für die Balken (1) ausgebildeten Tisch (5) zum Vorschub bzw. zur Unterstützung und zur Ausrichtung der zu verbindenden Balken (1) od. dgl. Vorschubeinrichtungen (6) und Führungseinrichtungen (7), oberhalb des Tisches (5) eine Zusammenpreßeinrichtung (8) zum Zusammenpressen der Balken (1) od. dgl. bzw. zu deren Anpressen an den Tisch (5) und beiderseits des Tisches (5) und damit der zu verbindenden Balken (1) od. dgl. Einpreßplatten (9) angeordnet sind, die Halterungen (10) für die Nagelplatten (2) einstellbar auf die Verbindungsebene bzw. -ebenen der Balken (1) od. dgl. tragen, wobei die sich über die gesamte Höhenerstreckung der zu verbindenden Balken (1) od. dgl. hinaus erstreckenden Einpreßplatten (9) durch oberhalb und unterhalb der zu verbindenden Balken (1) od. dgl. liegende hydraulische Zylinder (27) und durch ein, vorzugsweise in einem Rahmengestell (3) der Vorrichtung gelagerte Hebelgestänge (28) als Parallelführung zu einer gemeinsamen gegenläufigen Bewegung untereinander verbunden sind.

2. Vorrichtung nach Anspruch 1, dadurch gekennzeichnet, daß Halterungen (10) federnde Stifte (29) od. dgl. zur Unterstützung der Nagelplatten (2) aufweisen.

3. Vorrichtung nach Anspruch 1 oder 2, dadurch gekennzeichnet, daß zur Zuführung von Nagelplatten (2) an dem Rahmengestell (3) seitlich und der Höhe nach verstellbare, taschenartige Führungen (31) angeordnet sind.

4. Vorrichtung nach einem der Ansprüche 1 bis 3,

0162040

dadurch gekennzeichnet, daß die Vorschubeinrichtungen (6) aus gegen die Unterseite und Oberseite der Balken (1) od. dgl. einwirkenden, z.B. durch Federn (11) belasteten oder gewichtsschwer ausgebildeten Walzen (12) bestehen, zu deren Antrieb Ölmotore (13) vorgesehen sind.

5. Vorrichtung nach einem der Ansprüche 1 bis 4, dadurch gekennzeichnet, daß vor und hinter dem Tisch (5) je eine gegen die Unterseite der Balken (1) od. dgl. einwirkende, an einem einarmigen, durch die Federn (11) belasteten Lenker (14) gelagerte Walze (12) angeordnet ist, und daß von oben gegen die Balken (1) od. dgl. einwirkende Walzen (12) gewichtsschwer oder federbelastet ausgebildet sind, wobei zum Antrieb der Walzen Ölmotore (13) vorgesehen sind.

6. Vorrichtung nach einem der Ansprüche 1 bis 5, dadurch gekennzeichnet, daß vor und hinter dem Tisch (5) je ein Walzenpaar (12'), gegebenenfalls mehrere Walzen, angeordnet ist bzw. sind, die an einem zweiarmigen Lenker (15) gelagert sind, der seinerseits an einer lotrechten Führung (16) gelagert und durch eine Feder (17) in Richtung gegen die Unterseite der zu verbindenden Balken (1) od. dgl. bewegbar ist, wogegen wenigstens eine der gegen die Oberseite der Balken (1) od. dgl. einwirkenden Walzen (12") gewichtsschwer ausgebildet oder federbelastet ist und daß zum Antrieb der Walzen bzw. Walzenpaare (12') Ölmotore (18), gegebenenfalls Kettentriebe (19), Stirnräder (21) od. dgl. vorgesehen sind.

7. Vorrichtung nach einem der Ansprüche 1 bis 6, dadurch gekennzeichnet, daß zum Abheben der gegen die Balken (1) od. dgl. von oben einwirkenden Walzen (12") ein Handhebel (20) angeordnet ist.

0162040

8. Vorrichtung nach einem der Ansprüche 1 bis 7, dadurch gekennzeichnet, daß die Führungseinrichtungen (7) für die Balken (1) od. dgl. aus Walzen oder Rollen (23) bestehen, die an vorzugsweise höhenverstellbaren Auslegern (22) lose drehbar gelagert sind, sowie aus seitlich an den Balken (1) od. dgl. anliegenden Walzen oder Rollen (23'), die gegebenenfalls als Vorschubwalzen oder -rollen ausgebildet sind.

9. Vorrichtung nach einem der Ansprüche 1 bis 8, dadurch gekennzeichnet, daß die Zusammenpreßeinrichtung (8) für die Balken (1) od. dgl. bzw. zu deren Anpressen an den Tisch (5) aus einer Andrückplatte (25) und einem Hydraulikzylinder (26) besteht.

10. Vorrichtung nach einem der Ansprüche 1 bis 9, dadurch gekennzeichnet, daß die Ölmotore (13, 18) zum Vorschub der zu verbindenden Balken (1) od. dgl. und die hydraulischen Zylinder (26) zur Betätigung der Zusammenpreßvorrichtung (8) sowie die hydraulischen Zylinder (27) zur Betätigung der Einpreßplatten (9) abwechselnd und taktweise über eine mechanische, hydraulische, elektrische oder elektronische Steuerung betätigbar sind.

11. Vorrichtung nach einem der Ansprüche 1 bis 10, dadurch gekennzeichnet, daß ein Ständer des Rahmengestelles (3) in Form eines Kastenträgers (4) als Ölbehälter ausgebildet ist.

Fig.1

Fig.2

0162040

Fig.3

Fig.4